**Europäisches Patentamt**

**European Patent Office**

**Office européen des brevets**

(11) Publication number: **0 365 339**
**A1**

# EUROPEAN PATENT APPLICATION

(21) Application number: **89310791.2**

(22) Date of filing: **20.10.89**

(51) Int. Cl.5: **F01L 1/34 , F16D 3/10 , F16H 1/32**

(30) Priority: **20.10.88 GB 8824612**

(43) Date of publication of application: **25.04.90 Bulletin 90/17**

(84) Designated Contracting States:
**AT BE CH DE ES FR GB GR IT LI LU NL SE**

(71) Applicant: **FORD MOTOR COMPANY LIMITED**
**Eagle Way**
**Brentwood Essex CM13 3BW(GB)**

(84) **BE CH GB GR IT LI LU NL SE AT**

Applicant: **FORD MOTOR COMPANY**
**County of Wayne**
**Dearborn, MI 48120(US)**

(84) **ES**

Applicant: **FORD FRANCE S. A.**
**B.P. 307**
**F-92506 Rueil-Malmaison Cédex(FR)**

(84) **FR**

Applicant: **FORD-WERKE AKTIENGESELLSCHAFT**
**Werk Köln-Niehl Henry-Ford-Strasse**
**Postfach 60 40 02**
**D-5000 Köln 60(DE)**

(84) **DE**

(72) Inventor: **Ma, Thomas Tsoi-Hei**
**1 Collingwood Road**
**South Woodham Ferrers Essex(GB)**

(74) Representative: **Messulam, Alec Moses et al**
**A. Messulam & Co. 24 Broadway**
**Leigh on Sea Essex SS9 1BN(GB)**

(54) Actuation system for a phase mechanism.

(57) An actuating system is described for a phase change mechanism wherein the phase change mechanism comprises a rotatable phase change assembly and an actuator which rotates at the same speed as the assembly when the phase between a drive and a driven member is to be maintained constant and which is required to rotate relative to the phase change assembly to bring about a change in phase.

The actuating system comprises reaction members 50, 52 coupled to the actuator 26 and braking means 54, 56 associated with the reaction members 50, 52. The reaction member when not braked is free to rotate with the phase change mechanism, but when braked each serves to vary the speed of the actuator 26 relative to speed of the phase change mechanism in a different sense.

FIG.1

## ACTUATING SYSTEM FOR A PHASE CHANGE MECHANISM

The invention relates to an actuating system for a phase change mechanism for varying the phase of a driven member relative to a drive member. The invention can be used for the camshaft of an internal combustion engine and in particular for varying the relative phase of opening and closing of the inlet and exhaust valves in a dual overhead camshaft internal combustion engine.

The optimum times for opening and closing the inlet and exhaust valves in an internal combustion engine depend, inter alia, upon engine speed. In any engine with fixed angles for opening and closing the valves for all engine operating conditions, the valve timing is a compromise which detracts from the engine efficiency in all but a limited range of operating conditions. For this reason, control systems have been proposed which vary the valve timing during engine operation.

In other control systems, variation of the valve timing has been proposed as a means for regulating the engine output power. For example, if the inlet valve is allowed to remain open for part of the compression stroke, the volumetric efficiency of the engine can be reduced. Such a system requires an even greater range of control over the phase of the camshaft and the control needs to be continuous over the full adjustment range.

Most of the prior art proposals employ a linear actuator to set the desired phase shift and they rely on converting the linear movement of the actuator into a rotary movement of the camshaft relative to its drive pulley or gear. One such example has been to include a helical gear on the camshaft and to move the helical gear axially to cause the phase of the camshaft to change.

Phase change mechanisms which convert linear actuation movement into an angular phase shift have certain disadvantages which have prevented their being generally adopted in engine designs intended for mass production. Their space requirements are difficult to satisfy and even more serious problems are presented by the cost, complexity and size of the linear actuating system which they require.

Actuation of any phase change mechanism requires an external power source. Amongst the proposed sources of force for actuating the phase change mechanism have been electro-mechanical actuators (motors or solenoids), or hydraulic actuators. One complexity resulting from such designs is that supplying current or hydraulic fluid to a rotating actuator is troublesome. If the prime mover is stationarily mounted, then this problem is avoided but creates a new problem in how to couple the force from the prime mover to the phase change mechanism. All such proposals also involve friction losses, exacerbate the packaging problem and add to the manufacturing cost.

In EP-A-0 274 019, an actuating system is described for varying engine valve timing in which an actuating member must be moved axially to bring about a phase change. The actuating member is mounted on a threaded shaft and a retarder can arrest the actuating member so that as the shaft continues to turn the actuating member is advanced along the thread. However, there is no corresponding driven return motion and instead a spring is used to screw the actuating member back to its original position when the retarder is released. Such an actuating system has the limitation of being an essentially two position device. In one position, the retarder is permanently energised and in the other it is released. When energised, the retarder must be capable of slipping when the actuating member reaches the end of its travel. This system therefore permanently consumes power when actuated. The return spring cannot exert as much torque as the retarder and the speed of adjustment when relying on the return spring is limited.

With a view to mitigating at least some of the foregoing disadvantages, the present invention provides a phase change mechanism for transmitting torque from a drive to a driven member and varying the phase therebetween, having an actuator which is rotatable relative to the drive and driven members to cause phase variation and an actuating system for rotating the actuating member relative to the drive and driven members, the actuating system comprising at least one reaction member coupled to the actuator and braking means associated with the reaction member, characterised in that the actuating member, when not braked, is free to rotate with the drive and driven members, and in that movement of the actuator both in the sense to advance the phase and in the sense to retard the phase is effected by braking means acting on a reaction member.

Whereas most prior art attempts at adjusting the position of the actuator have employed external active sources of power, the present invention, in common with EP-A-0 274 019, makes use of the rotation of the phase change mechanism itself to bring about the desired operation of the actuator, the only external force required being friction.

The actuator can be slowed down relative to the phase change mechanism by coupling it directly to the braked reaction member and allowing the phase change mechanism to overtake it. This relative motion causes a phase change in one direction.

In contrast to EP-A-0 274 019, however, in the present invention rotation of the actuator relative to the phase change mechanism in the opposite sense is also powered by the engine and does not rely on a return spring. The actuating member is not acted upon by a return force, and is free to rotate with the phase change mechanism once the desired phase angle between the drive and driven members has been attained. This means that there is no power needed to maintain a phase setting.

Rotating the actuating member in order to cause a phase change in the opposite sense may be achieved in a variety of ways, but in the preferred embodiment of the invention a further reaction member having an associated braking means is used for this purpose. The reaction member here is coupled indirectly to the actuator. For example, the actuator may be coupled to the sun gear of a planetary gears set of which the ring gear is connected to the braked reaction member and the cage of the planetary gears rotates with the phase change mechanism. When not braked, the ring gear rotates in unison with the sun gear and the planetary gear. However, when braked, the ring gear causes the planetary gears to rotate and drive the sun gear faster that the phase change mechanism, causing the actuator to overtake the phase change mechanism.

Other alternatives also present themselves for driving the actuator faster than the phase change mechanism. For example, a roller driven by the drive train of the phase change mechanism may be selectively coupled to the reaction member using an idler roller. Once again, the main driving force is derived in this case from the drive train of the phase change mechanism and only a friction coupling is required to accelerate the actuator.

Various possibilities exist for the design of a phase change mechanism with a rotary actuator. Any mechanism employing linear actuation can be converted for this purpose by a nut engaging a fine thread connected to the rotary actuator, as shown in EP-A-0 274 019, but any such design requires a significant amount of space and places limits on the amount of advance and retard that can be achieved.

In co-pending Patent Application No. 8824613.7, filed on 20 October 1988, there is described a phase change mechanism which avoids the problems associated with linear actuation by using differential gearing which requires rotation of an eccentric to bring about the desired phase change between a drive and a driven member. It is preferred to employ such a form of phase change mechanism, the eccentric being the actuator to which the or each reaction member of the actuating system is coupled, directly or indirectly.

The invention will now be described further, by way of example, with reference to the accompanying drawings, in which:

Figure 1 is section through a phase change mechanism and an actuating system,

Figure 2 is a section on line II-II in Figure 1, and

Figure 3 is a section on line III-III in Figure 1.

The illustrated embodiment is intended for changing the phase of an engine camshaft relative to the crank shaft. The camshaft 10 is generally conventional and is not shown in full in the drawings. An angular position sensor 12 is provided on the camshaft 10 in order to provide position feedback for control of the actuating system.

A hub 14 is secured to the camshaft 10 by a bolt 16. The coupling between the hub 14 and the camshaft 10 may rely exclusively on friction, in the interest of continuous setting, or a key may be provided between the two, if preferred to avoid accidental slippage. The drive pulley 18 which is driven by a timing belt or a timing chain is freely journalled for rotation about the outer periphery of the hub 14, by sliding or rolling bearings (not shown).

The coupling between the hub 14 and the pulley 18 is effected by differential gears. An internally toothed gear ring 22 is secured concentrically with the drive pulley 18. A second gear 24 of smaller diameter than the gear ring 22 is freely journalled about an eccentric actuator 26 and meshes with the gear ring 22 on only one side, the teeth on the other side being clear of one another by virtue of the eccentric position of the gear 24. The actuator 26 has a hollow spindle 28 by which it can be driven relative to the gear 24.

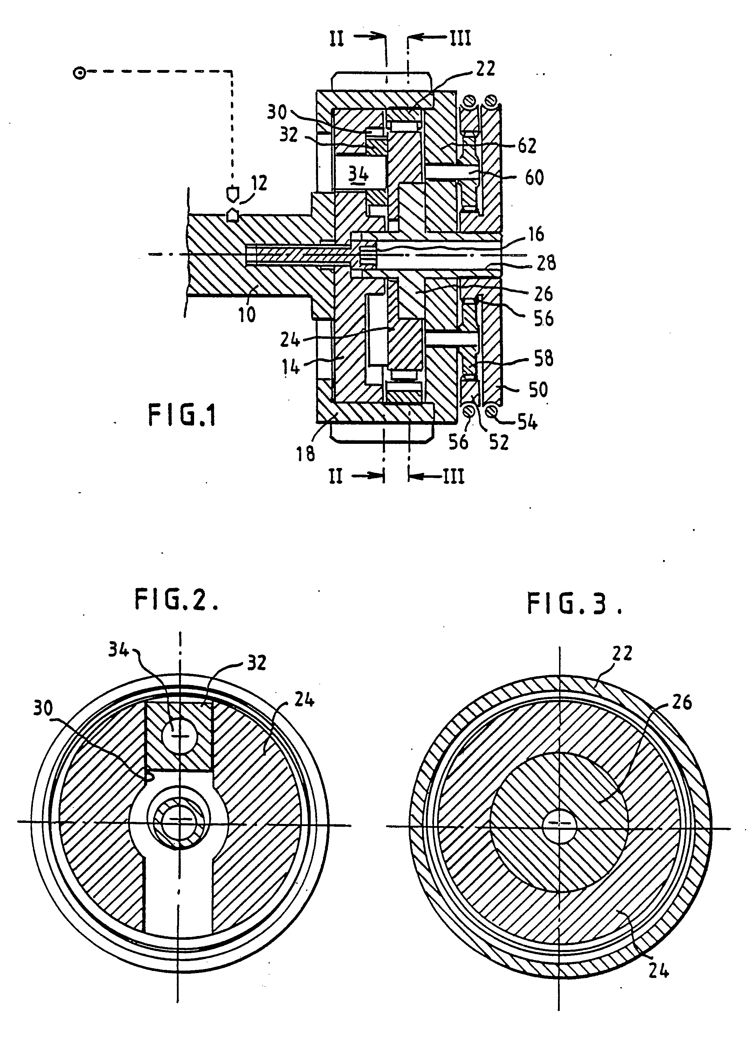

On one face of the gear 24, there is machined a guide groove 30 (see Figure 2) which receives a slider block 32 in turn journalled on a pin 34 which is fastened to the hub 14.

The effect of rotating the eccentric actuator 26 is to cause the gear 24 to roll around the inner surface of the gear ring 22 secured to the drive pulley 18, each full rotation of the eccentric actuator 26 causing the rotation of the gear 24 about its own axis relative to the drive pulley 18 by an amount equal to the difference in the number of teeth on the two inter-meshing sets of teeth.

In the absence of rotation of the eccentric actuator 26 relative to the gear 24, the drive pulley 18, the gear ring 22, the gear 24, the slider 32, the pin 34, the hub 14 and the camshaft 10 all rotate in unison torque thus being transmitted from the drive pulley 18 to the camshaft 10.

If the actuator 26 is made to turn relative to the gear 24, and this can be done either by braking the actuator 26 and allowing the gear 24 to overtake it or by making the actuator 26 turn faster than the gear 24, then the relative motion causes the gear 24 to roll as previously described, following what is termed a trochoidal path, causing the gear 24, and with it the slider block 32, the pin 34, the hub 14 and the camshaft 10, to rotate relative to the drive pulley 18 and thereby introduce the desired phase change.

The actuating system for the actuator 26 comprises two reaction members 50 and 52 each associated with a respective brake band 54 and 56. The reaction member 50 is a wheel fast in rotation with the actuator spindle 28. When the wheel 50 is braked by its band 54, it slows down the rotation of the actuator 26 to bring about a phase shift in one sense of the camshaft 10 relative to the drive pulley 18.

The second reaction member 52 is the ring gear of a planetary gear set comprising a sun gear 56 and planet gears 58. The sun gear 56 of the planetary gear set is secured to the spindle 28 and can conveniently be formed integrally with the reaction member 50. The planet gears journalled on pins 60 secured to a cover plate 62 fastened to the drive pulley 18. It can be seen that the drive pulley 18 and the hub 14 together form a self-enclosed and self-supporting assembly that can be mounted on the camshaft 10 as a complete sub-assembly using the bolt 16.

In the brake band 56 is applied to brake the second reaction member 52, when the planet gears 58 are rotated by the pulley 18, through the cover 62 and their pins 60, they will drive the sun gear 56 and hence the spindle 28 faster than the speed of the pulley and the gear 24 and this will bring about a phase change in the opposite sense of the pulley 28 relative to the cam shaft 10.

In the absence of braking, there is no tendency for either reaction member to rotate at a speed different from that of the phase change mechanism and consequently release of the two brake bands will maintain the prevailing setting of the phase angle.

The torque for causing a phase change is always derived from the engine output power and this affords ample power to permit very fast setting of the phase angle. Furthermore, the minimum number of engine cycles required for a given phase change is constant over the entire engine speed range. Of course, the minimum time required for a given phase change to be achieved occurs under maximum braking of the reaction member and should this rate of phase change be excessive then it can be reduced by applying the brake bands 54 and 56 more gently and allowing some slippage.

There is no simple direct relationship between the operation of the brake bands and the resulting phase shift. To control the actuating mechanism, one therefore needs to resort to a form of negative position feedback in which the actual phase of the camshaft is measured and compared with its desired phase to develop an error signal. The error signal, depending on its sign, is then applied to one or other of the two brake bands to set the value of the phase at the desired level. It is for this reason that a position sensor 12 is included in the camshaft 10. Of course, it is possible to incorporate some form of position sensor on the hub 14 in order to avoid modification to an existing camshaft 10.

If desired, the interior space defined by the hub 14, the pulley 18, the cover 62 and the spindle 28 can be totally contained using suitable seals and can be filled with oil so that the entire device may be self-lubricating. The moving elements outside this sealed enclosure, are only under light load because of the very high gear ratio of the differential gearing so that they my be lubricated by grease of by being made from a self lubricating plastics material.

The brakes for the reaction members may be continuous brake bands, as can be found in automatic gearboxes, brake shoes operated by a calliper of the twin leading or single leading variety, or disc brakes. In all cases, the brakes are to one side of the reaction member and not in line with the camshaft, so that the length of the engine (the most critical dimension) is not increased.

Because a brake band or a brake shoe may used for braking, little force is required to brake the reaction member. For this reason, the brakes can be operated by electrically energised solenoids connected directly or by flexible cables to the brake bands or callipers. The solenoids may themselves be small and the flexible connection allows them to be mounted remotely from the front end of the engine at a convenient location.

The preferred embodiment described above offers the important advantages that by mere substitution for the existing timing pulley, the described assembly can convert an existing engine into one benefiting from variable valve timing. The space requirements of the assembly are little different from those for a conventional timing pulley and the whole phase change mechanism, complete with its actuating system, does not add to the total length of the engine.

## Claims

1. A phase change mechanism for transmitting torque from a drive (18) to a driven (10) member and varying the phase therebetween, having an actuator (26) which is rotatable relative to the drive and driven members (18,10) to cause phase vari-

4

ation and an actuating system for rotating the actuating member (26) relative to the drive and driven members, the actuating system comprising at least one reaction member (50) coupled to the actuator (26) and braking means (54) associated with the reaction member (50), characterised in that the actuating member (26), when not braked, is free to rotate with the drive and driven members (18,10), and in that movement of the actuator (26) both in the sense to advance the phase and in the sense to retard the phase is effected by, braking means (54,56) acting on a reaction member (50,52).

2. A phase change mechanism as claimed in Claim 1, wherein the actuator (26) is coupled to a reaction member (50) in such a manner that braking of the reaction member (50) causes a reduction of the speed of the actuator (26) relative to the phase change mechanism.

3. A phase change mechanism as claimed in claim 2, wherein the reaction member (50) is fast in rotation with the actuator (26).

4. A phase change mechanism as claimed in any preceding claim, having two reaction members (50,52) each associated with a respective braking means, the second reaction member (52) being indirectly coupled to the actuator (26) whereby operation of the second braking means (56) causes an increase of the speed of the actuator relative to the phase change mechanism.

5. A phase change mechanism as claimed in claim 4, wherein the actuator (26) is coupled to the sun gear (56) of a planetary gears set of which the ring gear is connected to the second reaction member (52) and the planet gears (58) are mounted for rotation with the drive member (18) of the phase change mechanism.

6. A phase change mechanism as claimed in any preceding claim, wherein the braking means (54,56) are solenoid operated.

7. A phase change mechanism as claimed in claim 7, wherein the solenoids are mounted remotely from the braking means (54,56) and are connected thereto by flexible cables.

8. A phase change mechanism as claimed in claim 6 or 7, further comprising an electrical control system for energising the solenoids, the control system being connected to receive a signal from an angular position sensor (12) for sensing the actual phase of the driven member relative to the drive member and being operative to compare the actual phase signal with a desired phase signal to develop an error signal for controlling the braking means so as to change the phase in the appropriate sense to reduce the error.

FIG.1

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-274019 (EATON)<br>* column 2, line 30 - column 3, line 50 *<br>* column 4, line 36 - column 4, line 44; figures 1-5 * | 1, 2, 6-8 | F01L1/34<br>F16D3/10<br>F16H1/32 |
| A | EP-A-234853 (CLEMSON)<br>* column 13, line 24 - column 15, line 30; figures 1-6 * | 1 | |
| A | GB-A-529012 (DUNCAN)<br>* page 4, line 8 - page 4, line 41 * | 1 | |
| | * page 5, line 70 - page 6, line 20; figures 1-7 * | 1 | |
| A | FR-A-895657 (HEBERLEIN)<br>* page 3, line 3 - page 3, line 34; figure 2 * | 1 | |

TECHNICAL FIELDS SEARCHED (Int. Cl.5)

F01L
F16D
F16H

The present search report has been drawn up for all claims

| Place of search | Date of completion of the search | Examiner |
|---|---|---|
| THE HAGUE | 25 JANUARY 1990 | LEFEBVRE L.J.F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)